# EUROPEAN PATENT APPLICATION

(11) **EP 4 645 468 A1**
(43) Date of publication of application: **05.11.2025**
(21) Application number: 23910141.3
(22) Date of filing: 13.12.2023
(51) Int. Cl.: H01M 4/505, H01M 4/525

(54) **MULTI-ELEMENT-COATED MODIFIED SINGLE-CRYSTALLINE NICKEL COBALT LITHIUM MANGANATE POSITIVE ELECTRODE MATERIAL, PREPARATION METHOD THEREFOR AND LITHIUM ION BATTERY**

(30) Priority: 29.12.2022 CN 202211708439
(71) Applicant: BASF Shanshan Battery Materials Co., Ltd., Changsha, Hunan 410205 (CN)
(72) Inventor: ZHANG, Qiang, Changsha, Hunan 410205 (CN); HUANG, Min, Changsha, Hunan 410205 (CN); YANG, Jing, Changsha, Hunan 410205 (CN); TAN, Xinxin, Changsha, Hunan 410205 (CN); LUO, Gui, Changsha, Hunan 410205 (CN)
(74) Representative: Finetti, Claudia
(86) International application number: PCT/CN2023/138390
(87) International publication number: WO 2024/140211

(57) **Abstract**

A modified single-crystalline nickel cobalt lithium manganate positive electrode material, a preparation method therefor, and a lithium ion battery. The modified single-crystalline nickel cobalt lithium manganate positive electrode material comprises a matrix and a coating layer coating the surface of the matrix. The chemical formula of the matrix is LiₐNiₓCo_{y}Mn_{1-x-y-z}M_{z}O₂, where 0.9≤a≤1.2, 0.5≤x<1, 0<y≤0.2, 0≤z≤0.1, and M comprises one or more of Ti, Mg, Y, Al or Zr elements; the coating layer comprises tungsten elements and aluminum elements, the mass of the tungsten elements accounting for 0.2%-1.0% of the mass of the matrix of the positive electrode material, and the mass of the aluminum elements accounting for 0.03%-0.2% of the mass of the matrix of the positive electrode material; the coating layer comprises Al₂(WO4)₃. At high temperature, jointly coating the single-crystalline nickel cobalt lithium manganate positive electrode material with an Al compound, a W compound and a small quantity of lithium source can improve the initial charge/discharge capacity and the rate capability of the positive electrode material, and further reduce the content of residual NiO on the surface of the positive electrode material, thus reducing side reactions between positive electrode materials and electrolytes during electrochemical processes.

## Description

### TECHNICAL FIELD

The present application relates to the technical field of positive electrode materials of lithium-ion batteries, particularly to a single-crystal nickel-manganese-cobalt positive electrode material, a preparation method thereof, and a lithium-ion battery.

### BACKGROUND

With the development of new energy vehicles, the demand for extended driving ranges continues to increase. Consequently, for positive electrode materials of lithium-ion batteries, it is crucial to develop lithium-ion batteries with high energy, high power-density, and low cost. Compared with lithium cobalt oxides, lithium nickel-manganese-cobalt oxides as ternary positive electrode materials offer significant advantages in terms of capacity and cost due to their lower cobalt content and higher capacity.

Currently, the lithium nickel-manganese-cobalt oxide positive electrode materials are developed toward two primary directions, secondary spherical particles and single-crystal particles, distinguished by morphology. At present, the preparation methods have been maturely established for both morphologies of materials. Chinese patent application No. 201811382498.7 describes a method for preparing a secondary spherical particle morphology material, yielding a positive electrode material with secondary spherical particle morphology. Secondary spherical particles exhibit relatively high energy density due to their small primary particle sizes. However, their application is limited by factors such as poor high-temperature cycling performance, rapid increase in direct current resistance (DCR) at high temperatures, and gas generation, making them more suitable for application in the energy storage field rather than the power field. Chinese patent application No. 201710883429.3 describes a method for preparing a single-crystal material, yielding a positive electrode material with single-crystal morphology. Single-crystal ternary positive electrode materials exhibit less anisotropy in grain lattice expansion and contraction during cycling as their primary particles have relatively large size and integrated structure, maintaining structural integrity during repeated cycling, thereby enhancing cycling stability. Additionally, the low specific surface area and excellent structural stability of single-crystal materials contribute to improved cycling stability, allowing the particles to retain their original morphology even after long-term cycling. These materials are widely applied in the new energy industry.

Generally, single-crystal ternary positive electrode materials have relatively large primary particle sizes, which results in low energy density and poor power performance. The primary method to increase the energy density of the single-crystal materials is to raise the cut-off voltage. However, when the cut-off voltage is raised to ≥4.35 V, the material surface undergoes a structural transformation from a layered structure to a spinel phase and subsequently to a NiO rock-salt phase. During repeated intercalation and deintercalation of lithium ions, intracrystalline cracks may be formed within the material due to the anisotropy of the crystal structure. The electrolyte solution may infiltrate into the particle interior and trigger various side reactions on the particle surface. These factors degrade the capacity, cycling performance, rate performance, and cause gas generation of lithium-ion batteries. Therefore, improving the surface structural stability of single-crystal materials has become a critical research topic for single-crystal ternary positive electrode materials. Surface coating is a common modification technique for single-crystal ternary positive electrode materials, including coating with a lithium transition metal oxide (e.g., Li₂ZrO₃, LiCoO₂, LiAlO₂, Li₂WO₄, etc.) or with an electrochemically inactive metal oxide (e.g., Al₂O₃, ZrO₃, MgO, TiO₂, etc.).

Typically, coating with Al₂O₃ is an effective approach to enhance the surface structural stability of layer-type lithium transition metal oxide positive electrode materials and reduce interfacial side reactions between the material and the electrolyte solution. The non-patent document, Binghong Han, Baris Key, Saul H. Lapidus, Juan C. Garcia, Hakim Iddir, John T. Vaughey, and Fulya Dogan, Applied Materials & Interfaces (47) 2017: 41291-41302, discloses that after high-temperature surface sintering, element Al can be detected in the transition metal layer of the lattice. For nickel-manganese-cobalt layer-type positive electrode materials, Al₂O₃ coating significantly weakens its coating effect and may even lead to poorer capacity and cycling performance. Thus, direct coating with Al₂O₃ is not feasible. For tungsten-coated layer-type positive electrode materials, only a reduction in material resistance is achieved, improving capacity and rate performance. Non-patent document, Xinhe Yang, Zicheng Zuo, Haiyan Wang, Quanbin Chen, Hui Zhang, Zhenlei Huang, Borong Wu, Henghui Zhuo, Electrochimica Acta (180) 2015: 604-609, confirms that the layer-type materials coated solely with tungsten oxide do not form stable tungsten compounds, leading to their accumulation on the graphite negative electrode during electrochemical reactions, resulting in poor high-temperature cycling and storage performance.

### SUMMARY

The present application provides a single-crystal lithium nickel-manganese-cobalt oxide positive electrode material modified with a multi-element coating including Al and W, a preparation method thereof, and an application thereof in preparation of a lithium-ion battery, aiming to address the shortcomings and deficiencies mentioned in the background section.

To address the above-described technical issues, the technical solutions provided by the present application are as follows:
A multi-element coated modified single-crystal lithium nickel-manganese-cobalt oxide positive electrode material includes a matrix and a coating layer coated on the surface of the matrix. The matrix is represented by a chemical formula of LiₐNiₓCo_{y}Mn_{1-x-y-z}M_{z}O₂, where 0.9≤a≤1.2, 0.5≤x<1, 0<y≤0.2, 0≤z≤0.1, and M includes one or more elements selected from Ti, Mg, Y, Al, and Zr. The coating layer includes tungsten and aluminum elements. The mass ratio of element W to the matrix is in a range from 0.2% to 1.0%, and the mass ratio of element Al to the matrix is in a range from 0.03% to 0.2%. The coating layer includes Al₂(WO₄)₃.

Preferably, the coating layer further includes either or both of Li₂WO₄ and Li₄WO₅.

The multi-element coated modified single-crystal lithium nickel-manganese-cobalt oxide positive electrode material of the present application is prepared from co-coating with an aluminum compound, a tungsten compound, and a small additional amount of lithium source at high temperature. The element Al in the aluminum compound and the element W in the tungsten compound form a stable compound Al₂(WO₄)₃ at high temperature, effectively suppressing the diffusion of element Al from the aluminum compound into the transition metal layer in the crystal lattice of the material, forming an aluminum-tungsten compound coating layer on the material surface, thereby enhancing interfacial stability, effectively stabilizing the surface structure of the material. Additionally, the tungsten compound may react with the lithium source and residual lithium in the material to form stable lithium tungsten oxides, significantly reducing the dissolution of element W from the coating into the electrolyte solution, promoting tight binding of the coating to the surface of the positive electrode material, effectively improving the capacity and power performance of the material.

Preferably, the specific surface area of the single-crystal lithium nickel-manganese-cobalt oxide positive electrode material is in a range from 0.5 m²/g to 0.8 m²/g.

Preferably, the particle size distribution of the single-crystal lithium nickel-manganese-cobalt oxide positive electrode material is as follows: Dv50 is in a range from 3.0 µm to 4.5 µm, Dv90 is in a range from 6.0 µm to 8.0 µm, and Dv99 is less than 10 µm.

Preferably, on the surface of the single-crystal lithium nickel-manganese-cobalt oxide positive electrode material, a residual NiO content is in a range from 300 ppm to 500 ppm of the mass of the single-crystal lithium nickel-manganese-cobalt oxide positive electrode material, a residual Li₂CO₃ content is in a range from 0.08% to 0.15% of the mass of the single-crystal lithium nickel-manganese-cobalt oxide positive electrode material, and a residual LiOH content is in a range from 0.04% to 0.10% of the mass of the single-crystal lithium nickel-manganese-cobalt oxide positive electrode material.

Based on the same technical concept, the present application further provides a method for preparing the above-described single-crystal lithium nickel-manganese-cobalt oxide positive electrode material, including the following steps:
S1: mixing a nickel-manganese-cobalt hydroxide precursor with a first lithium source and an M-containing compound, and subjecting the mixture to a first sintering process to obtain the matrix;
S2: mixing the matrix with a second lithium source and a coating agent, where the coating agent includes an aluminum compound and a tungsten compound, and subjecting the mixture to a second sintering process at a temperature in a range from 750 °C to 950 °C, thereby achieving the multi-element coated modified single-crystal lithium nickel-manganese-cobalt oxide positive electrode material.

In the present application, the second sintering process is a process to supplement a small amount of lithium. Since the matrix formed in step S1 undergoes crushing, the particle surface contains a significant amount of fine powder and rock-salt phase. Step S2 employs a relatively high reaction temperature, allowing the lithium source supplemented in this step and the residual lithium on the surface formed from the first sintering process to sufficiently undergo chemical reactions. The metal oxides as the coating agent can also participate in the chemical reactions, which occur almost simultaneously with the repair process of the fine powder and the rock-salt phase, facilitating their tight binding to the surface of the positive electrode material.

In the present application, if the second sintering process is performed at a low temperature (<600 °C), the aluminum and tungsten compounds would yield unsatisfactory coating effects, leading to increased internal resistance and electrochemical polarization of the material. However, coating with aluminum oxide alone at a high temperature (700 °C to 900 °C) may cause Al diffusion into the crystal lattice of the material, resulting in poor coating performance. It can be found through research that mixing and sintering the positive electrode material with the aluminum compound and the tungsten compound can significantly suppress the diffusion kinetics of Al into the bulk phase of the material, forming a composite coating layer containing one or more of Al₂(WO₄)₃, Li₂WO₄, or Li₄WO₅, on the surface of the positive electrode material, thereby stabilizing the surface structure of the material and improving the overall performance of the material.

Preferably, the first lithium source and the second lithium source are respectively one or more compounds selected from lithium carbonate, lithium nitrate, lithium hydroxide, and lithium acetate. The molar ratio of element Li in the first lithium source to the nickel-manganese-cobalt hydroxide precursor is in a range from 1.0:1 to 1.2:1. The molar ratio of element Li in the second lithium source to element W in the tungsten compound is in a range from 2:1 to 4:1.

Preferably, the M-containing compound includes one or more compounds selected from an M-containing carbonate, an M-containing hydroxide, an M-containing nitrate, an M-containing chloride, an M-containing sulfate, and an M-containing oxide.

Preferably, the aluminum compound includes one or more compounds selected from aluminum oxide, aluminum hydroxide, and aluminum oxyhydroxide. The tungsten compound includes one or more compounds selected from tungsten oxide and ammonium tungstate. The molar ratio of element W in the tungsten compound to element Al in the aluminum compound is in a range from 1.5:1 to 3:1.

Preferably, the first sintering process is performed at a temperature in a range from 920 °C to 1000 °C for a time period in a range from 6 hours (h) to 14 h. The first sintering process is performed in either oxygen or air atmosphere.

Preferably, the second sintering process is performed at a temperature in a range from 800 °C to 850 °C for a time period in a range from 2 h to 12 h. The second sintering process is performed in either oxygen or air atmosphere. Sintering below 800 °C may reduce the stability of the compound formed by Al and W and limit the repair degree of the fine powder and the rock-salt phase. Conversely, sintering at an excessively high temperature may enhance the diffusion kinetics of Al into the bulk phase of the material, adversely affecting the electrochemical performance of the material.

Based on the same technical concept, the present application further provides a lithium-ion battery. The lithium-ion battery includes a positive electrode current collector, a positive electrode layer coated on the positive electrode current collector and including the above-described positive electrode material, a negative electrode current collector, a negative electrode layer coated on the negative electrode current collector and including a negative electrode material, a separator disposed between the positive electrode layer and the negative electrode layer, and an electrolyte solution. The positive electrode material is the above-described multi-element coated modified single-crystal lithium nickel-manganese-cobalt oxide positive electrode material.

Compared with the prior art, the present application has the following advantages:
(1) The single-crystal lithium nickel-manganese-cobalt oxide positive electrode material prepared by the present application has the following advantages: First, the initial charge and discharge capacities and rate performance can be improved, and the low power issue can be addressed. Second, the high-temperature capacity retention of the material at high charge cut-off voltage can be improved. Third, the increase in internal resistance and gas generation during high temperature storage at high charge cut-off voltage can be mitigated. Fourth, the surface properties of the single-crystal nickel-manganese-cobalt positive electrode material can be improved, reducing residual NiO content on the surface and reducing side reactions with the electrolyte solution during electrochemical processes.
(2) In the present application, the multi-element coated modified single-crystal lithium nickel-manganese-cobalt oxide positive electrode material is prepared from co-coating with an aluminum compound, a tungsten compound, and a small additional amount of lithium source at high temperature. The element Al in the aluminum compound and the element W in the tungsten compound form a stable compound Al₂(WO₄)₃ at high temperature, effectively suppressing the diffusion of element Al from the aluminum compound into the transition metal layer of the crystal lattice of the material, forming an aluminum-tungsten compound coating layer on the material surface, thereby enhancing interfacial stability, effectively stabilizing the surface structure of the material. Additionally, the tungsten compound may react with the lithium source and residual lithium in the material to form stable lithium tungsten oxides, significantly reducing the dissolution of element W from the coating into the electrolyte solution, promoting tight binding of the coating to the surface of the positive electrode material, effectively improving the capacity and power performance of the material.
(3) In the preparation method of the present application, through the high-temperature sintering for coating and the addition of a small amount of lithium source (lithium hydroxide, lithium carbonate, etc.), the fine powder and rock-salt phase formed on the surface of the matrix through the first sintering process can react with residual lithium on the surface and the additional lithium source, thereby being integrated with the single-crystal particles. This process reduces the fine powder content and NiO content, thereby improving the high-temperature cycling performance of the material.
(4) In the preparation method of the multi-element coated modified single-crystal lithium nickel-manganese-cobalt oxide positive electrode material of the present application, the tungsten compound not only forms a lithium-containing coating which contribute to improving the capacity and rate performance, but also reduces the diffusion kinetics of element Al in the coating. The additional lithium source not only promotes formation of the lithium-tungsten compounds but also reduces the fine powder content and the NiO content on the surface. Therefore, adopting the tungsten compound, aluminum compound, and a small amount of lithium source together for the coating in the present application not only compensates for the deficiencies of a single-compound coating but also creates a synergistic effect among the three compounds, further improving the capacity, cycle life, and high-rate performance of the positive electrode material.

In summary, through surface modification with a multi-element composite coating layer, the single-crystal lithium nickel-manganese-cobalt oxide positive electrode material of the present application can exhibit excellent electrochemical performance in terms of specific capacity, cycling performance, and rate performance.

### BRIEF DESCRIPTION OF THE DRAWINGS

In order to describe the technical solutions of the embodiments of the present application or the related art more clearly, the drawings used in the embodiments or the related art will be described briefly. Apparently, the following described drawings are merely for some embodiments of the present application, and other drawings can be derived according to these drawings by those of ordinary skill in the art without any creative effort.
FIG. 1 shows a scanning electron microscopic (SEM) image of a single-crystal lithium nickel-manganese-cobalt oxide positive electrode material prepared in Example 1 of the present application.
FIG. 2 shows a particle size volume distribution graph of the single-crystal lithium nickel-manganese-cobalt oxide positive electrode material prepared in Example 1 of the present application.
FIG. 3 shows an X-ray photoelectron spectroscopy (XPS) spectrum of the single-crystal lithium nickel-manganese-cobalt oxide positive electrode material prepared in Example 1 of the present application.
FIG. 4 shows an SEM image of a single-crystal lithium nickel-manganese-cobalt oxide positive electrode material prepared in Comparative Example 1.
FIG. 5 shows a particle size volume distribution graph of the single-crystal lithium nickel-manganese-cobalt oxide positive electrode material prepared in Comparative Example 1.

### DETAILED DESCRIPTION

In order to facilitate the understanding of the present application, the present application will be comprehensively described in details with reference to the drawings and the embodiments. However, the protection scope of the present application is not limited to the embodiments described below.

Unless defined otherwise, all technical terms used herein have the same meaning as commonly understood by those skilled in the art of the present application. The technical terms used in the present application are for the purpose of describing specific embodiments only and are not intended to limit the protection scope of the present application.

Unless described otherwise, the raw materials, reagents, and instruments are all commercially available from the market or manufactured by conventional methods.

### Example 1

A multi-element coated modified single-crystal lithium nickel-manganese-cobalt oxide positive electrode material includes a positive electrode material matrix represented by a chemical formula of Li_{1.02}Ni_{0.666}Co_{0.08}Mn_{0.25}Zr_{0.004}O₂ and a tungsten-containing compound coating layer coated on the surface of the matrix. The tungsten-containing compound coating layer includes Al₂(WO₄)₃, Li₂WO₄, and Li₄WO₅. The mass ratio of element W to the matrix is 0.5%, and the mass ratio of element Al to the matrix is 0.04%.

The multi-element coated modified single-crystal lithium nickel-manganese-cobalt oxide positive electrode material in this example was prepared by a method including the following steps:
(1) A commercially available nickel-manganese-cobalt hydroxide precursor Ni_{0.67}Co_{0.08}Mn_{0.25}(OH)₂ was uniformly mixed with LiOH·H₂O and nano-sized zirconium oxide in a molar ratio of 1:1.02:0.004. The mixed material was then sintered at a constant temperature of 950 °C for 12 h in an oxygen atmosphere (oxygen concentration >96%), cooled, crushed, and sieved through a 200-mesh screen to obtain a positive electrode material matrix, which was a lithium transition metal oxide. The molecular formula of the positive electrode material matrix was Li_{1.02}Ni_{0.666}Co_{0.08}Mn_{0.25}Zr_{0.004}O₂, as confirmed through inductively coupled plasma (ICP) analysis.
(2) The positive electrode material matrix obtained from step (1) was uniformly mixed with 0.055 mol of nano-WO₃, 0.014 mol of nano-Al₂O₃, and 0.22 mol of LiOH·H₂O to form a mixture, wherein the mass ratio of element W to the positive electrode material matrix was 0.5%, and the mass ratio of element Al to the positive electrode material matrix was 0.04%. The mixture was then sintered in a kiln under the following sintering conditions: air atmosphere, heating at 3 °C/min to 830 °C, holding for 10 h, and naturally cooling to room temperature. The resulting material was sieved through a 200-mesh screen to obtain the final single-crystal lithium nickel-manganese-cobalt oxide positive electrode material coated with tungsten-containing compounds.

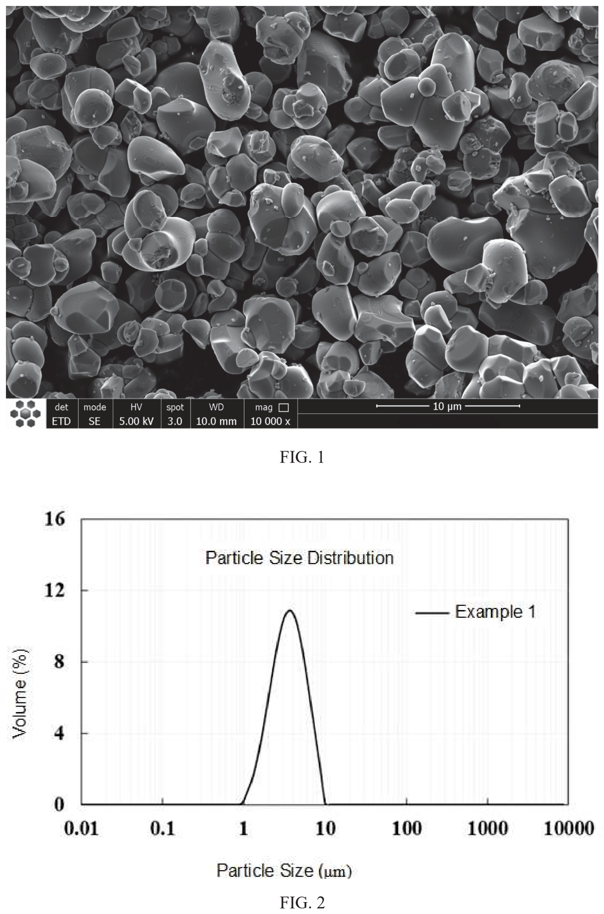

It can be observed in the SEM image shown in FIG. 1 that the surface of the coated sample was relatively smooth with minimal fine powder particles, and fine dotted coatings were present. FIG. 2 shows no peak in the particle size volume distribution below the Dv1 region. The specific surface area was 0.658 m²/g, the Dv50 value was 3.7 µm, the Dv90 value was 7.2 µm, and the Dv99 value was 8.6 µm. ICP testing indicates that the residual NiO content on the surface of the composite-coated sample was 300 ppm, a low level that is conducive to mitigating unfavorable phase transitions during cycling, thereby improving structural stability.

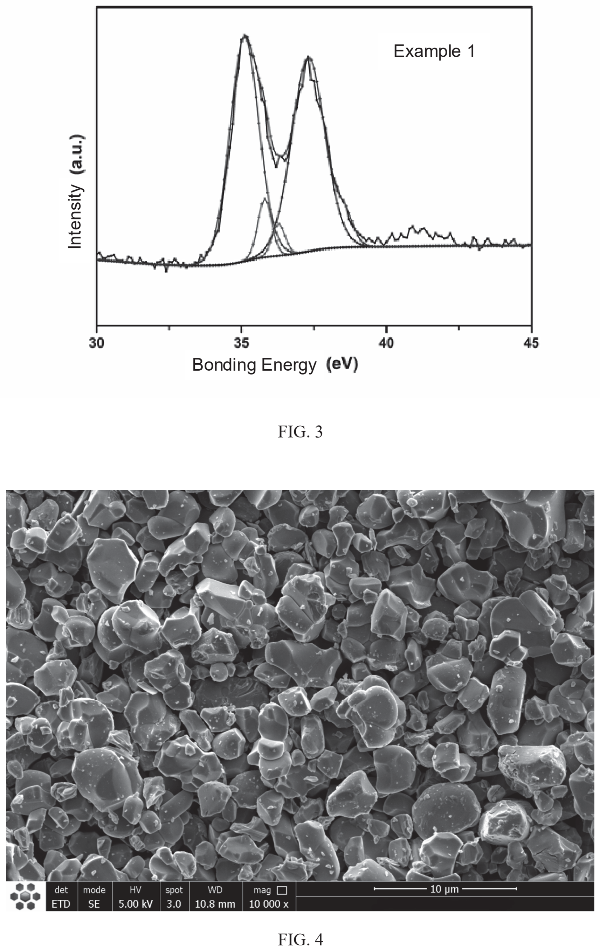

The XPS spectrum shown in FIG. 3 indicates that the main components of the tungsten-containing compounds on the surface of the coated sample were Al₂(WO₄)₃, Li₂WO₄, and Li₄WO₅. The formation of stable Al₂(WO₄)₃ effectively suppressed the diffusion of element Al of the aluminum compound into the transition metal layer in the crystal lattice of the material, forming an aluminum-tungsten compound coating layer on the material surface, thereby enhancing interfacial stability, effectively stabilizing the surface structure of the material. Additionally, element W reacted with the lithium source and residual lithium in the material to form stable lithium tungsten oxides, significantly reducing the dissolution of element W from the coating into the electrolyte solution, promoting tight binding of the coating to the surface of the positive electrode material, effectively improving the capacity and power performance of the material.

### Example 2

The differences between this example and Example 1 were as follows: In step (2), 0.0079 mol of ammonium tungstate was weighed, where the mass ratio of element W to the positive electrode material matrix was 0.5%. The sintering conditions were as follows: air atmosphere, heating at 3 °C/min to 850 °C and holding for 10 h. All other process parameters were the same as in Example 1.

### Example 3

The differences between this example and Example 1 were as follows: In step (2), 0.028 mol of aluminum hydroxide was weighed, where the mass ratio of element Al to the positive electrode material matrix was 0.05%. The sintering conditions were as follows: air atmosphere, heating at 3°C/min to 800°C and holding for 10 hours. All other process parameters were the same as in Example 1.

### Comparative Example 1

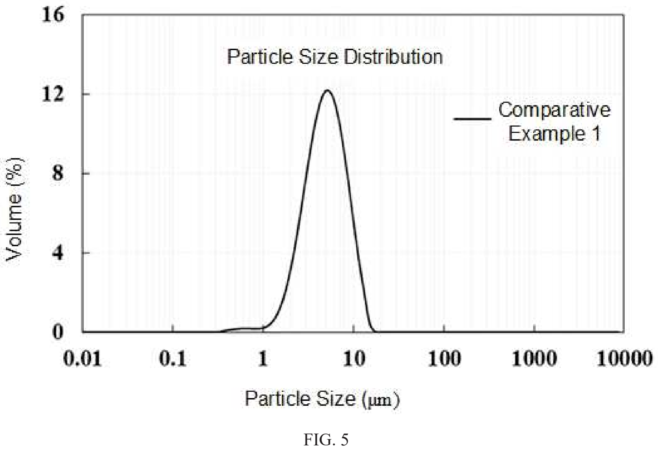

This comparative example is specific for the positive electrode material matrix, the lithium transition metal oxide Li_{1.02}Ni_{0.666}Co_{0.08}Mn_{0.25}Zr_{0.004}O₂, prepared in step (1) of Example 1. FIG. 4 shows the SEM image of the single-crystal lithium nickel-manganese-cobalt oxide positive electrode material prepared in Comparative Example 1. FIG. 5 shows the particle size volume distribution of the single-crystal lithium nickel-manganese-cobalt oxide positive electrode material prepared in Comparative Example 1.

### Comparative Example 2

Step (1) in this comparative example was identical to that in Example 1. The difference was in step (2): only 0.22 mol of LiOH·H₂O was weighed and mixed with the positive electrode material matrix. All other process parameters were the same as in Example 1.

### Comparative Example 3

Step (1) in this comparative example was identical to that in Example 1. The difference was in step (2): only 0.055 mol of WO₃ was weighed and mixed with the positive electrode material matrix, where the mass ratio of element W to the positive electrode material matrix was 0.5%. All other process parameters were the same as in Example 1.

### Comparative Example 4

Step (1) in this comparative example was identical to that in Example 1. The difference was in step (2): only 0.055 mol of WO₃ and 0.014 mol of Al₂O₃ were weighed and mixed with the positive electrode material matrix, wherein the mass ratio of element W to the positive electrode material matrix was 0.5%, and the mass ratio of element Al to the positive electrode material matrix was 0.04%. All other process parameters were the same as in Example 1.

### Comparative Example 5

Step (1) in this comparative example was identical to that in Example 1. The difference was in step (2): the sintering conditions were as follows: air atmosphere, heating at 3 °C/min to 700 °C and holding for 10 h, followed by natural cooling to room temperature. All other process parameters were the same as in Example 1.

The positive electrode materials prepared in the examples and comparative examples were each mixed with conductive carbon black and PVDF binder in a mass ratio of 92:5:3, using NMP as a solvent. The mixture was uniformly coated onto aluminum foil, dried at 120 °C for 12 h, pressed, and punched into 12 mm circular discs. In a glovebox under argon gas protection (oxygen content <1 ppm, moisture content <1 ppm), CR2032 button cells were assembled using lithium metal foil as the positive electrodes. Electrochemical performance tests were conducted at 25 °C within a voltage window of 3.0 V to 4.45 V. The specific test protocol was as follows. 1^{st} cycle: 0.1C charge, 0.1C discharge; 2^{nd} cycle: 0.2C charge, 0.2C discharge; 3^{rd} cycle: 0.2C charge, 0.5C discharge; 4^{th} cycle: 0.2C charge, 1C discharge; 5^{th} cycle: 0.2C charge, 0.2C discharge; 6^{th} to 55^{th} cycles: 1C charge, 1C discharge. The electrochemical data, including 0.1C discharge specific capacity, 2C discharge specific capacity, and capacity retention after 50 cycles (ratio of discharge specific capacity at 55^{th} cycle to that at 6^{th} cycle) of the button cells assembled with the materials obtained from the examples and comparative examples, as well as the surface NiO content, residual lithium content, and fine powder content thereof, are presented in Table 1.

**Table 1: Electrochemical data and surface NiO content, residual lithium content, and fine powder content data of the examples and comparative examples**

| | 0.1C discharge specific capacity (mAh/g) | 1C discharge specific capacity (mAh/g) | Capacity retention after 50 cycles (%) | Internal resistance growth rate after 50 cycles (%) |
|---|---|---|---|---|
| Example 1 | 206.5 | 185.8 | 97.5 | 25.2 |
| Example 2 | 205.5 | 184.9 | 96.5 | 24.7 |
| Example 3 | 206.9 | 186.2 | 97.2 | 25.3 |
| Comparative example 1 | 202.2 | 181.6 | 94.2 | 50.2 |
| Comparative example 2 | 203.4 | 182.5 | 94.5 | 55.6 |
| Comparative example 3 | 206.4 | 184.5 | 94.6 | 45.6 |
| Comparative example 4 | 204.3 | 183.1 | 96.5 | 35.5 |
| Comparative example 5 | 202.2 | 180.2 | 93.7 | 46.7 |

**Table 1. continued**

| | NiO (ppm) | Fine powder (<Dv1) (%) | Residual lithium Li₂CO₃ (%) | Residual lithium LiOH (%) |
|---|---|---|---|---|
| Example 1 | 300 | 0.35 | 0.09 | 0.06 |
| Example 2 | 300 | 0.40 | 0.11 | 0.06 |
| Example 3 | 320 | 0.38 | 0.10 | 0.05 |
| Comparative example 1 | 1000 | 1.5 | 0.18 | 0.15 |
| Comparative example 2 | 360 | 0.40 | 0.20 | 0.22 |
| Comparative example 3 | 350 | 0.35 | 0.05 | 0.05 |
| Comparative example 4 | 360 | 0.42 | 0.07 | 0.06 |
| Comparative example 5 | 800 | 0.85 | 0.25 | 0.25 |

It can be seen from the data in Table 1 that comparing Example 1 with Comparative Example 1, the coating including the tungsten-containing compounds exhibits superior performance, including better electrochemical performance, lower residual lithium, lower residual NiO, and reduced fine powder content. Comparing Example 1 with Comparative Example 5, the coating with tungsten oxide, aluminum oxide, and lithium source achieves optimal effects only at high temperatures. High temperatures promote the formation of tungsten-containing composite compounds and suppress the diffusion of element Al into the crystal lattice of the material, further demonstrating the advantages of the composite coating modification. Comparing Example 1 with Comparative Example 4, although tungsten oxide and aluminum oxide can react with residual lithium at high temperatures to significantly reduce residual lithium, the absence of additional lithium supplementation results in insufficient lithium, leading to lower production of lithium tungsten oxides, reducing the improvement in capacity and rate performance of the material.

Comparing Example 1 with Comparative Example 3, while tungsten oxide can react with residual lithium and the additional lithium source at high temperatures to fully synthesis lithium tungsten oxides, significantly improving the capacity and rate performance of the material, the absence of Al₂O₃ results in poorer cycling performance and greater internal resistance growth. Compared with the single-sintered material in Comparative Example 1, the coated material exhibits significantly reduced surface NiO, Li₂CO₃, and LiOH contents, which enhances the processability of the electrode plates and reduces gas generation in lithium-ion batteries. After high-temperature composite coating modification, the single-crystal positive electrode material possesses the advantages of single-compound coating while compensating for the deficiencies of single-compound coating. The lithium-ion batteries assembled with this material as the active material demonstrate high capacity, high rate performance, long cycle life, and low internal resistance growth.

The above is only the embodiments of the present application, and the protection scope of the present application is not limited to the above-described embodiments. For those skilled in the art, the improvement and conversion obtained without departing from the technical concept of the present application should also be within the protection scope of the present application.

## Claims

1. A single-crystal lithium nickel-manganese-cobalt oxide positive electrode material coated and modified with multiple elements, comprising a matrix and a coating layer coated on a surface of the matrix,
wherein the matrix is represented by a chemical formula of LiₐNiₓCo_{y}Mn_{1-x-y-z}M_{z}O₂, where 0.9≤a≤1.2, 0.5≤x<1, 0<y≤0.2, 0≤z≤0.1, and M comprises one or more elements selected from the group consisting of Ti, Mg, Y, Al, and Zr;
the coating layer comprises tungsten and aluminum elements; a mass ratio of element W to the matrix is in a range from 0.2% to 1.0%, and a mass ratio of element Al to the matrix is in a range from 0.03% to 0.2%; the coating layer comprises Al₂(WO₄)₃.

2. The single-crystal lithium nickel-manganese-cobalt oxide positive electrode material according to claim 1, wherein the coating layer further comprises either or both of Li₂WO₄ and Li₄WO₅.

3. The single-crystal lithium nickel-manganese-cobalt oxide positive electrode material according to claim 1 or 2, wherein a specific surface area of the single-crystal lithium nickel-manganese-cobalt oxide positive electrode material is in a range from 0.5 m²/g to 0.8 m²/g.

4. The single-crystal lithium nickel-manganese-cobalt oxide positive electrode material according to claim 1 or 2, wherein a particle size distribution of the single-crystal lithium nickel-manganese-cobalt oxide positive electrode material is as follows: Dv50 is in a range from 3.0 µm to 4.5 µm, Dv90 is in a range from 6.0 µm to 8.0 µm, and Dv99 is less than 10 µm.

5. The single-crystal lithium nickel-manganese-cobalt oxide positive electrode material according to claim 1 or 2, wherein on a surface of the single-crystal lithium nickel-manganese-cobalt oxide positive electrode material, a residual NiO content is in a range from 300 ppm to 500 ppm of a mass of the single-crystal lithium nickel-manganese-cobalt oxide positive electrode material, a residual Li₂CO₃ content is in a range from 0.08% to 0.15% of the mass of the single-crystal lithium nickel-manganese-cobalt oxide positive electrode material, and a residual LiOH content is in a range from 0.04% to 0.10% of the mass of the single-crystal lithium nickel-manganese-cobalt oxide positive electrode material.

6. A method for preparing the single-crystal lithium nickel-manganese-cobalt oxide positive electrode material according to any one of claims 1 to 5, comprising following steps:
S1: mixing a nickel-manganese-cobalt hydroxide precursor with a first lithium source and an M-containing compound, and subjecting the mixture to a first sintering process to obtain the matrix; and
S2: mixing the matrix with a second lithium source and a coating agent, where the coating agent comprises an aluminum compound and a tungsten compound; and subjecting the mixture to a second sintering process at a temperature in a range from 750 °C to 950 °C, thereby achieving the single-crystal lithium nickel-manganese-cobalt oxide positive electrode material coated and modified with multiple elements.

7. The method according to claim 6, wherein the first lithium source and the second lithium source are respectively one or more compounds selected from the group consisting of lithium carbonate, lithium nitrate, lithium hydroxide, and lithium acetate, a molar ratio of element Li in the first lithium source to the nickel-manganese-cobalt hydroxide precursor is in a range from 1.0:1 to 1.2:1, a molar ratio of element Li in the second lithium source to element W in the tungsten compound is in a range from 2:1 to 4:1.

8. The method according to claim 7, wherein the M-containing compound comprises one or more compounds selected from the group consisting of an M-containing carbonate, an M-containing hydroxide, an M-containing nitrate, an M-containing chloride, an M-containing sulfate, and an M-containing oxide.

9. The method according to claim 8, wherein the aluminum compound comprises one or more compounds selected from the group consisting of aluminum oxide, aluminum hydroxide, and aluminum oxyhydroxide; the tungsten compound comprises one or more compounds selected from the group consisting tungsten oxide and ammonium tungstate; a molar ratio of element W in the tungsten compound to element Al in the aluminum compound is in a range from 1.5:1 to 3:1.

10. The method according to any one of claims 6 to 9, wherein the first sintering process is performed at a temperature in a range from 920 °C to 1000 °C for a time period in a range from 6 h to 14 h, and the first sintering process is performed in either oxygen or air atmosphere.

11. The method according to claim 10, wherein the second sintering process is performed at a temperature in a range from 800 °C to 850 °C for a time period in a range from 2 h to 12 h, and the second sintering process is performed in either oxygen or air atmosphere.

12. A lithium-ion battery, comprising:
a positive electrode current collector;
a positive electrode layer coated on the positive electrode current collector and comprising a positive electrode material;
a negative electrode current collector;
a negative electrode layer coated on the negative electrode current collector and comprising a negative electrode material;
a separator disposed between the positive electrode layer and the negative electrode layer; and
an electrolyte solution;
wherein the positive electrode material is the single-crystal lithium nickel-manganese-cobalt oxide positive electrode material according to any one of claims 1 to 11.
